# EUROPÄISCHE PATENTSCHRIFT

(11) **EP 2 656 345 B1**
(45) Veröffentlichungstag und Bekanntmachung des Hinweises auf die Patenterteilung: **01.10.2014**
(21) Anmeldenummer: 11818970.3
(22) Anmeldetag: 23.12.2011
(51) Int. Cl.: G11B 23/50, G03D 15/00

(54) **VERFAHREN ZUR REKONDITIONIERUNG VON DATENTRÄGERN**
METHOD FOR RECONDITIONING DATA CARRIERS
PROCÉDÉ DE RESTAURATION DE SUPPORTS DE DONNÉES

(30) Priorität: 23.12.2010 AT 21242010
(43) Veröffentlichungstag der Anmeldung: 30.10.2013
(73) Patentinhaber: Österreichische Akademie der Wissenschaften, 1010 Wien (AT)
(72) Erfinder: WALLASZKOVITS, Nadja, A-2491 Neufeld (AT); LIEPERT, Peter, A-1140 Wien (AT); SPOLJARIC-LUKACIC, Lidija, A-1120 Wien (AT)
(74) Vertreter: Gibler & Poth Patentanwälte OG
(86) Internationale Anmeldenummer: PCT/AT2011/000516
(87) Internationale Veröffentlichungsnummer: WO 2012/088553

(56) Entgegenhaltungen:
- GB-A- 486 360
- US-B1- 6 969 581

## Beschreibung

Die Erfindung betrifft ein Verfahren zur Rekonditionierung von Datenträgern mit einem Kunststoffanteil gemäß dem Oberbegriff des Patentanspruches 1.

Es sind Datenträger bekannt, insbesondere Film- bzw. Tonträger, welche einen Kunststoffanteil aufweisen. Derartige Film- bzw. Tonträger weisen den Nachteil auf, dass diese mit fortschreitendem Alter immer schlechter werdende, insbesondere mechanische, Eigenschaften aufweisen. Diese Verschlechterung der Eigenschaften kann dazu führen, dass ein auf einer Spule oder Wickel aufgespulter Film- bzw. Tonträger nicht mehr zerstörungsfrei abgespult werden kann.

Zwar sind Verfahren zur Rekonditionierung von Datenträgern mit einem Kunststoffanteil bekannt, bei welchen der Datenträger einem Dampf aus beispielsweise Wasser, Aceton und/oder flüchtigem Weichmacher für einen längeren Zeitraum ausgesetzt wird, allerdings hat sich gezeigt, dass die erzielte Rekonditionierung, beispielsweise die Verbesserung der mechanischen Eigenschaften des Datenträgers, oft nur von kurzer Dauer ist.

Aus der GB 486 360 A ist ein Verfahren zur Behandlung kinematografischer Filme bekannt, wobei das Hauptaugenmerk auf die Festigung der perforierten Randbereiche liegt.

Aus der US 6 969 581 B1 ist ein Behandlungsverfahren für Filme auf Acetat Basis bekannt, wobei die behandelnden Chemikalien in einem dampfförmigen Zustand sind, wobei eine Präservierungsflüssigkeit in flüssiger Phase auf den Datenträger aufgebracht wird und wobei die Präservierungsflüssigkeit ein Lösungsmittel und zumindest einen Weichmacher umfasst.

Aufgabe der Erfindung ist es daher ein Verfahren der eingangs genannten Art anzugeben, mit welchem die genannten Nachteile vermieden werden können, mit welchem eine langanhaltende Rekonditionierung des Datenträgers erreicht werden kann.

Erfindungsgemäß wird dies durch die Merkmale des Patentanspruches 1 erreicht. Dadurch kann eine langanhaltende Rekonditionierung des Datenträgers erreicht werden. Durch das erfindungsgemäße Verfahren kann nicht nur eine Rückgewinnung der Informationen des Datenträgers ermöglicht, ; sondern zudem auch die weitere Lagerungsfähigkeit des behandelten Datenträgers verbessert werden. Dadurch kann der Datenträger nicht nur ausgelesen und kopiert werden, sondern als Originaldokument weitere Jahre sicher gelagert werden. Weiters kann ein, auf einer Spule aufgewickelter streifen- oder bandförmigen Datenträger, insbesondere ein Film- bzw. Tonband, bei welchem vor der Behandlung einzelne Lagen bereits derart ineinander verzahnt waren, dass bereits der Versuch der mechanischen Trennung bzw. des Abspulens zu einer Beschädigung des Datenträgers führt, wieder problemlos abgespult werden. Dadurch wird weiters die mechanische Beanspruchbarkeit des streifen- oder bandförmigen Datenträgers derart verbessert, dass dieser durch eine Bandmaschine bzw. eine Kopiermaschine verarbeitet werden kann, ohne dabei beschädigt zu werden. Dadurch kann weiters die Wiedergabequalität insbesondere hochfrequenter Inhalte, wie etwa von Obertönen bei Tonaufnahmen bzw. feiner Bilddetails bei fotografischen Inhalten, deutlich verbessert werden. Es hat sich weiters gezeigt, dass in vorteilhafter Weise die Auswirkungen des sogenannten Vinegar-Syndroms, bei welchem ein Datenträger umfassend Zelluloseacetat unter Freigabe von Essigsäure zerfällt, auf einen Datenträger bekämpft werden können. Es können daher bislang als unrettbar verloren geglaubte Aufzeichnungen kultureller Schaffungen bzw. historischer Ereignisse wieder ausgelesen bzw. abgespielt werden. Durch das erfindungsgemäße Verfahren können wichtige Teile des kulturellen Erbes der Menschheit vor dem unwiederbringlichen Verlust gerettet, und für allfällig nachfolgende Generationen gesichert werden.

Ausdrücklich wird hiermit auf den Wortlaut der Ansprüche Bezug genommen, wodurch die Ansprüche an dieser Stelle durch Bezugnahme in die Beschreibung eingefügt sind und als wörtlich wiedergegeben gelten.

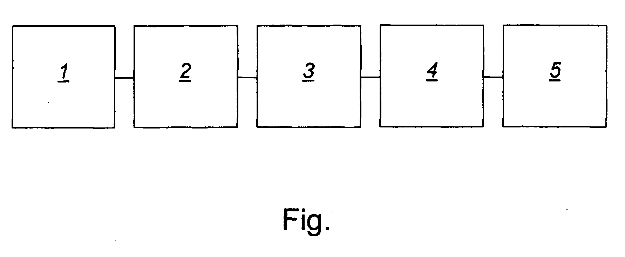

Die Erfindung wird unter Bezugnahme auf die beigeschlossene Zeichnung, in welcher lediglich eine bevorzugte Ausführungsform beispielhaft dargestellt ist, näher beschrieben. Dabei zeigt die einzige Figur eine bevorzugte Ausführungsform eines Verfahrens zur Rekonditionierung von Datenträgern mit einem Kunststoffanteil als Flussdiagramm.

Die einzige Figur zeigt eine bevorzugte Ausführungsform eines Verfahrens zur Rekonditionierung von Datenträgern mit einem Kunststoffanteil, wobei eine Rekonditionierungsflüssigkeit in flüssiger Phase auf den Datenträger aufgebracht wird, wobei die Rekonditionierungsflüssigkeit zumindest ein Lösungsmittel und zumindest einen Weichmacher umfasst, dass das Lösungsmittel derart ausgewählt wird, dass es gegenüber dem Datenträger im Wesentlichen inert ist, dass ein nicht flüchtiger Weichmacher ausgewählt wird, und die Konzentration des Weichmachers in der Rekonditionierungsflüssigkeit derart gewählt wird, dass der Volumenänderungsgradient des Datenträgers aufgrund des Austausches von Weichmacher mit der Rekonditionierungsflüssigkeit positiv ist.

Dadurch kann eine langanhaltende Rekonditionierung des Datenträgers erreicht werden. Durch das erfindungsgemäße Verfahren kann nicht nur eine Rückgewinnung der Informationen des Datenträgers ermöglicht, sondern zudem auch die weitere Lagerungsfähigkeit des behandelten Datenträgers verbessert werden. Dadurch kann der Datenträger nicht nur ausgelesen und kopiert werden, sondern als Originaldokument weitere Jahre sicher gelagert werden. Weiters kann ein, auf einer Spule aufgewickelter streifen- oder bandförmigen Datenträger, insbesondere ein Film- bzw. Tonband, bei welchem vor der Behandlung einzelne Lagen bereits derart ineinander verzahnt waren, dass bereits der Versuch der mechanischen Trennung bzw. des Abspulens zu einer Beschädigung des Datenträgers führt, wieder problemlos abgespult werden. Dadurch wird weiters die mechanische Beanspruchbarkeit des streifen- oder bandförmigen Datenträgers derart verbessert, dass dieser durch eine Bandmaschine bzw. eine Kopiermaschine verarbeitet werden kann, ohne dabei beschädigt zu werden. Dadurch kann weiters die Wiedergabequalität insbesondere hochfrequenter Inhalte, wie etwa von Obertönen bei Tonaufnahmen bzw. feiner Bilddetails bei fotografischen Inhalten, deutlich verbessert werden. Es hat sich weiters gezeigt, dass in vorteilhafter Weise die Auswirkungen des sogenannten Vinegar-Syndroms, bei welchem ein Datenträger umfassend Zelluloseacetat unter Freigabe von Essigsäure zerfällt, auf einen Datenträger bekämpft werden können. Es können daher bislang als unrettbar verloren geglaubte Aufzeichnungen kultureller Schaffungen bzw. historischer Ereignisse wieder ausgelesen bzw. abgespielt werden. Durch das erfindungsgemäße Verfahren können wichtige Teile des kulturellen Erbes der Menschheit vor dem unwiederbringlichen Verlust gerettet, und für allfällig nachfolgende Generationen gesichert werden.

Eine Rekonditionierung eines Datenträgers bedeutet im Sinne der Erfindung, dass die Eigenschaften des Datenträgers, vorzugsweise die mechanischen wie beispielsweise Elastizität und/oder Dehnbarkeit, verbessert werden. Weiters bedeutet Rekonditionierung eines Datenträgers im Sinne der Erfindung, dass das Volumen des Kunststoffanteils des Datenträgers vergrößert wird. Im generellen Sinne bedeutet Rekonditionierung eines Datenträgers im Sinne der Erfindung, dass die Auslesbarkeit oder Kopierbarkeit der auf dem Datenträger enthaltenen Information verbessert bzw. wiederhergestellt werden.

Das Verfahren ist zur Rekonditionierung von Datenträger mit einem Kunststoffanteil vorgesehen.

Der Kunststoffanteil kann insbesondere aus Kunststoff ausgebildet sein.

Als Kunststoffanteil können dabei Materialien wie beispielsweise Zelluloseacetat, Zellulosemischester, Polyvinylchlorid (PVC), Polyethylenterephthalat (PET), biaxial orientierte Polyethylenterephthalat (boPET, Mylar) und/oder Polyethylennaphtalat verwendet werden.

Datenträger umfassen in der Regel eine Informationsschicht, welche die Informationen enthält, und eine Trägerschicht, welche hauptsächlich die mechanischen Eigenschaften des Datenträgers bestimmt. Dabei kann die Informationsschicht und/oder die Trägerschicht einen Kunststoffanteil enthalten. Beispielsweise sind Datenträger bekannt, deren Informationsschicht und Trägerschicht einen Kunststoffanteil umfassen, beispielsweise Tonbänder. Bei Tonbändern umfasst die Trägerschicht und die Informationsschicht in der Regel einen Kunststoffanteil, wobei die Informationsschicht in der Regel noch magnetisierbare Partikel umfasst.

Weiters sind Datenträger bekannt, bei denen lediglich die Trägerschicht einen Kunststoffanteil umfasst, beispielsweise Filme bei denen die Informationsschicht als Fotoemulsion ausgebildet ist.

Es sind auch Datenträger bekannt, bei denen lediglich die Informationsschicht einen Kunststoffanteil umfasst, beispielsweise Lackplatten, bei welchen die Informationsschicht beispielsweise aus Zelluloselack oder Acryllack, und die Trägerschicht beispielsweise aus Metall, Glas oder Karton ausgebildet ist.

Oft sind Datenträger streifen- oder bandförmig ausgebildet, wobei diese auf einer Spule oder Wickel aufgerollt und auch leichter abgespielt werden können. Bevorzugt ist für das Verfahren vorgesehen, dass als Datenträger ein Bandmaterial, vorzugsweise mit einer magnetisierbare Partikel umfassenden Informationsschicht, verwendet wird.

Dem Kunststoffanteil des Datenträgers wird in der Regel ein Weichmacher zugesetzt um erhöhtes Formänderungsvermögen, erhöhte elastische Eigenschaften und/oder geringere Härte zu erreichen. Solche Weichmacher gehen dabei mit dem Kunststoffanteil in der Regel keine chemische Verbindung ein. Zu einem gewissen Grad quillt ein Weichmacher den Kunststoffanteil, welchem er zugesetzt wurde, auf.

Da solche Weichmacher eine gewisse Flüchtigkeit aufweisen, kommt es mit zunehmendem Alter des Datenträgers zu einer Reduktion der Konzentration des Weichmachers im Kunststoffanteil, da der Weichmacher im Laufe der Zeit verdampft und/oder austritt.

Diese Verringerung der Konzentration des Weichmachers wirkt sich auf unterschiedliche Art und Weise negativ aus. Beispielweise kommt es durch die Verringerung der Konzentration des Weichmachers im Kunststoffanteil zu einer Verschlechterung der mechanischen Eigenschaften des Kunststoffanteiles wie beispielsweise Elastizität oder Dehnbarkeit.

Weiters kommt es durch den Verlust an Weichmacher zu einer Verringerung des Volumens des Kunststoffanteiles. Ein Nachteil, welcher durch die Schrumpfung entsteht, ist, dass viele Datenträger, beispielsweise ein 35mm Film, Perforationen zur Führung in einer Maschine, beispielsweise ein Abspielgerät oder eine Kopierermaschine, aufweisen, deren Abstand sich durch die Schrumpfung des Kunststoffanteiles verändert, wodurch der Datenträger nur noch durch teure Spezialmaschinen, welche auch mit veränderten Perforationsabständen arbeiten können, benutzt werden kann.

Da Datenträger in der Regel wenigstens zwei unterschiedliche Schichten aufweisen, welche weiters in der Regel mit der Zeit unterschiedlich stark schrumpfen, kommt es durch das Ausdampfen des Weichmachers zu einer Verkrümmung und/oder Wölbung des Datenträgers.

Das kann zu einer starken mechanischen Verzahnung eines, auf einer Rolle aufgespulten band- oder streifenförmigen, Datenträgers führen, was in weiterer Folge ein zerstörungsfreies Abspulen oder Abwickeln des Bandes von der Rolle vereiteln kann. Diese Vereitelung des Abspulens oder Abwickelns ist von besonderer Problematik, da dadurch andere Methoden zur Rettung der im Film- oder Tonband gespeicherten Information, wie beispielsweise ein Kopieren der Information auf einen anderen Datenträger, ebenfalls nicht mehr möglich sind.

Gemäß dem Verfahren ist vorgesehen, dass eine Rekonditionierungsflüssigkeit in flüssiger Phase auf den Datenträger aufgebracht wird, wobei die Rekonditionierungsflüssigkeit zumindest ein Lösungsmittel und zumindest einen Weichmacher umfasst. Eine Rekonditionierungsflüssigkeit in flüssiger Phase bedeutet im Sinne der Erfindung, dass sowohl das Lösungsmittel als auch der Weichmacher sich bei der Aufbringung auf den Datenträger in flüssiger Phase befinden. Dadurch, dass der Weichmacher in flüssiger Phase aufgebracht wird, kann ein Weichmacher ausgewählt werden, welcher einen niedrigen Dampfdruck aufweist. Dadurch, dass die Rekonditionierungsflüssigkeit in flüssiger Phase auf den Datenträger aufgebracht wird, kann die Rekonditionierungsflüssigkeit besonders tief einwirken, wodurch auch aufgerollte Datenträger effektiv behandelt werden können.

In dem Verfahren ist vorgesehen, dass das Lösungsmittel derart ausgewählt wird, dass es gegenüber dem Datenträger im Wesentlichen inert ist. Inert im Sinne der Erfindung bedeutet, dass das Lösungsmittel keine chemische Verbindung mit dem Datenträger eingeht, und/oder in den Datenträger eindiffundiert und den Datenträger damit quillt. Im Wesentlichen inert im Sinne der Erfindung bedeutet insbesonders, dass das Lösungsmittel eine nicht im Wesentlichen Maße bzw. vernachlässigbare chemische Verbindung mit dem Datenträger eingeht, und/oder in den Datenträger eindiffundiert und den Datenträger damit quillt. Dadurch kann der Datenträger lange Zeit im Lösungsmittel verbleiben, ohne dass sich nachteilige Veränderungen des Datenträgers ausbilden. Dadurch wird das Verfahren weniger aufwendig und fehleranfällig.

Das Lösungsmittel kann insbesondere auch als Flüssigkeitsgemisch ausgebildet sein. Da das Lösungsmittel im Wesentlichen inert ist, ist die Rekonditionierungsflüssigkeit dadurch frei von nicht inerten, also quellenden, zersetzenden oder mit dem Datenträger reagierenden, Lösungsmittelbestandteilen. Insbesondere kann weiters vorgesehen sein, dass die Rekonditionierungsflüssigkeit einen Weichmacher umfasst.

Weiters kann bevorzugt vorgesehen sein, dass das Lösungsmittel derart ausgewählt wird, dass es etwaige Klebeverbindungen des Datenträgers nicht negativ beeinflusst oder gar löst.

Bevorzugt ist dabei vorgesehen, dass ein explosionsungefährliches Lösungsmittel verwendet wird. Explosionsungefährlich im Sinne der Erfindung bedeutet, dass der Flammpunkt des Lösungsmittels über 40°C, insbesonders über 55°C, und besonders bevorzugt über 61 °C liegt. Dadurch kann einer Entflammung des Lösungsmittels bei einer üblichen Prozesstemperatur vorgebeugt werden. Dadurch kann das Verfahren mit wenig Aufwand von wenig ausgebildetem Personal ausgeführt werden. Weiters wird dadurch die Gefahr einer Vernichtung eines Datenträgers während dem Verfahren durch eine Explosion oder plötzliche Entzündung verringert. Durch einen hohen Flammpunkt des Lösungsmittels entfallen weiters zusätzliche Sicherheitsbestimmungen beim Transport und/oder Lagerung des Lösungsmittels, wodurch der Gesamtaufwand des Verfahrens weiter verringert gehalten werden kann.

Bevorzugt ist weiters vorgesehen, dass ein Lösungsmittel mit einem Flammpunkt unter 70°C verwendet wird. Dadurch kann das Lösungsmittel schnell verdampfen, wodurch die Gesamtdauer des Verfahrens gering bleibt.

Weiters ist bevorzugt vorgesehen, dass ein untoxisches Lösungsmittel verwendet wird. Untoxisch im Sinne der Erfindung bedeutet, dass die LD₅₀ bei oraler Aufnahme durch eine Ratte höher als 2000 mg/kg ist. Dadurch entfallen aufwendige Vorsichtsmaßnahmen bei der Durchführung des Verfahrens und/oder beim Transport und/oder Lagerung des Lösungsmittels. Dadurch kann das Verfahren von wenig ausgebildetem Personal ausgeführt werden. Weiters ist die Verwendung eines untoxischen Lösungsmittels vorteilhaft im Sinne des Umweltschutzes. Weiters ist bevorzugt vorgesehen, dass als Lösungsmittel entaromatisierte Kohlenwasserstoffe verwendet werden.

Als Lösungsmittel können beispielsweise gesättigte Kohlenwasserstoffe, welche bei der Durchführung des Verfahrens flüssig sind, wie beispielsweise Isoparaffin oder Flüssigkeiten umfassend Paraffine und/oder Naphtene, ein derartiges bevorzugtes Flüssigkeitsgemisch ist etwa unter dem Handels- bzw. Markennamen Shellsol D40 oder Shellsol D60 bekannt, verwendet werden.

Das Verfahren wird bevorzugt in einem Temperaturbereich zwischen 10°C und einer Temperatur, welche um 5°C kleiner als der Flammpunkt der Rekonditionierungsflüssigkeit ist, und einem Druckbereich zwischen 600 mbar und 1200 mbar, vorzugsweise ca. 1 bar, durchgeführt, wobei die Temperatur, bei welcher das Verfahren durchgeführt wird, über dem Flammpunkt des verwendeten Lösungsmittels liegt. Dadurch ist es nicht notwendig die Temperatur, bzw. den Druck während der Durchführung des Verfahrens zu kontrollieren, wodurch das erfindungsgemäße Verfahren mit wenig Aufwand an Gerätschaft durchführbar ist, wodurch das Verfahren wiederum ressourcenschonend und wenig fehleranfällig ist. In dem Verfahren ist weiters vorgesehen, dass ein nicht flüchtiger Weichmacher ausgewählt wird. Nicht flüchtig im Sinne der Erfindung bedeutet, dass der Weichmacher einen derart hohen Dampfdruck hat, dass die Konzentration des Weichmachers im Kunststoffanteil unter normalen Lagerbedingungen in hundert Jahren relativ nur um zehn Prozent abnimmt. Dadurch wird einer neuerlichen Verdampfung des Weichmachers aus dem Kunststoffanteil vorgebeugt, wodurch die durch das Verfahren erzielte Rekonditionierung langanhaltend ist. Dadurch können durch das Verfahren rekonditionierte Datenträger als Original wieder längere Zeit gelagert werden.

Der Weichmacher kann derart ausgewählt werden, dass die Mischung aus Lösungsmittel und Weichmacher eine Lösung oder eine Emulsion ergibt, und/oder die Mischung aus Lösungsmittel und Weichmacher nur durch Zugabe eines Emulgators erreicht wird.

Bevorzugt kann allerdings vorgesehen sein, dass der Weichmacher derart ausgewählt wird, dass er mit dem Lösungsmittel homogen mischbar ist. Dadurch kann auf die Zugabe eines Emulgators verzichtet werden. Weiters wird durch die homogene Mischbarkeit von Lösungsmittel und Weichmacher eine homogene Konzentration des Weichmachers im Lösungsmittel erzielt.

Als Weichmacher können dabei bevorzugt Phosphorsäureester und/oder Phthalsäureester, insbesondere Dibuthylphthalat, Di-2-Ethylhexylphthalat und/oder Triphenylphosphat, verwendet werden.

Wenn nur umweltschonende Weichmacher eingesetzt werden dürfen oder sollen, können in weiterer Folge auch 1,2 Cyclohexandicarbonsäurediisonylester und/oder Adipinsäureester als Weichmacher eingesetzt werden. Dadurch können einerseits die stets strenger werdenden Umweltauflagen in den Industriestaaten erfüllt werden, andererseits kann dadurch das erfindungsgemäße Verfahren auch in Ländern umweltschonend durchgeführt werden, welche über eine noch wenig entwickelte Abfaltentsorgung verfügen.

Im Verfahren ist vorgesehen, dass die Konzentration des Weichmachers in der Rekonditionierungsflüssigkeit derart gewählt wird, dass der Volumenänderungsgradient des Datenträgers aufgrund des Austausches von Weichmacher mit der Rekonditionierungsflüssigkeit positiv ist.

Dieser Austausch von Weichmacher mit der Rekonditionierungsflüssigkeit kann als Anreicherung von Weichmacher im Datenträger, insbesondere im Kunststoffanteil des Datenträgers, ausgebildet sein.

Ein positiver Volumenänderungsgradient des Datenträgers bedeutet im Sinne der Erfindung, dass es durch den Austausch von Weichmachern zwischen dem Kunststoffanteil des Datenträgers und der Rekonditionierungsflüssigkeit zu einer Zunahme des Gesamtvolumens des Weichmachers im Kunststoffanteil kommt. Insbesondere kann dadurch in weiterer Folge der Kunststoffanteil des Datenträgers gequellt werden.

Der Austausch von Weichmacher zwischen dem Kunststoffanteil und der Rekonditionierungsflüssigkeit erfolgt dabei vorwiegend durch einen Diffusionsprozess. Daher werden Weichmacher sowohl von der Rekonditionierungsflüssigkeit in den Kunststoffanteil diffundieren, als auch vom Kunststoffanteil in die Rekonditionierungsflüssigkeit.

Insbesondere kann vorgesehen sein, dass der Weichmacher zwischen dem Kunststoffanteil und der Rekonditionierungsflüssigkeit vorwiegend durch einen Diffusionsprozess ausgetauscht wird.

Weiters kann ein anderer Weichmacher, als jener, welcher sich bereits im Kunststoffanteil des Datenträgers befindet, verwendet werden. Dadurch wird nicht nur die Konzentration vom Weichmacher im Kunststoffanteil des Datenträgers erhöht, sondern es kann weiters der alte Weichmacher im Kunststoffanteil des Datenträgers durch einen anderen, welcher beispielsweise weniger flüchtig und/oder toxisch ist, ersetzt werden.

Der in den Kunststoffanteil eindringende Weichmacher kann weiters Substanzen aus dem Kunststoffanteil verdrängen, welche sich schädlich auf den Kunststoffanteil und damit dem Datenträger auswirken können. Solche Substanzen können beispielsweise Wasser und/oder Essigsäure im Datenträger umfassend Zelluloseacetat oder Zelluloseacetatmischester sein, welche das Vinegar-Syndrom, und somit die Zerstörung des Datenträgers, fördern.

Bevorzugt wird eine geringe Konzentration des Weichmachers in der Rekonditionierungsflüssigkeit ausgewählt. Dadurch kann ein allzu großer Konzentrationsgradient des Weichmachers im Inneren des Kunststoffanteils des Datenträgers vermieden werden. Weiters erfolgt dadurch eine langsamere Zunahme der Weichmacherkonzentration des Kunststoffanteils des Datenträgers, wodurch das Verfahren weniger fehleranfällig ist.

Bevorzugt wird eine Konzentration des Weichmachers in der Rekonditionierungsflüssigkeit von unter 10% ausgewählt.

Die Rekonditionierungsflüssigkeit kann auf unterschiedliche Weise in flüssiger Phase auf den Datenträger aufgebracht werden.

Bevorzugt kann vorgesehen sein, dass der Datenträger in die Rekonditionierungsflüssigkeit getaucht wird. Dadurch kann auf schonender und nicht aufwendiger Weise die Rekonditionierungsflüssigkeit auf den Datenträger aufgebracht werden.

Dabei kann der Datenträger durch die Rekonditionierungsflüssigkeit gezogen werden.

Bevorzugt wird dabei der Datenträger vollständig in die Rekonditionierungsflüssigkeit eingelegt. Dadurch kann das Verfahren mit sehr wenig personellen und materiellen Aufwand durchgeführt werden.

In Weiterführung der Erfindung kann vorgesehen sein, dass der Datenträger beim vollständigen Einlegen in die Rekonditionierungsflüssigkeit auf ein Auflegeelement, insbesondere einen Rost, bevorzugt einen Gitterrost, gelegt wird, um eine Verschmutzung des Datenträgers durch absinkende Schwebstoffe zu vermeiden, welche die Wiedergabequalität des Datenträgers negativ beeinflussen würden. Dadurch kann weiters ein auf einem Wickelkern aufgewickelter Datenträger in die Rekonditionierungsflüssigkeit eingelegt und entnommen werden, welcher bereits derart geschädigt ist, dass ein natürlicher Zusammenhalt des Wickels nicht mehr gegeben ist.

Gemäß einer weiteren Ausgestaltung der Erfindung kann vorgesehen sein, dass der Datenträger in die Rekonditionierungsflüssigkeit gehängt wird, wobei der Datenträger im Wesentlichen an allen Seiten von der Rekonditionierungsflüssigkeit umgeben ist. Bevorzugt wird der Datenträger an eine Vorrichtung, wie beispielsweise einen Haken oder eine U-förmige Vorrichtung gehängt, wobei diese Vorrichtung vorzugsweise eine vorgebbare Mehrzahl von Datenträgern aufnehmen kann. Dadurch kann der Datenträger auf eine nicht aufwendige Weise in die Rekonditionierungsflüssigkeit eingebracht und entnommen werden. Weiters kann dadurch eine vorgebbare Mehrzahl von Datenträgern auf einmal in die Rekonditionierungsflüssigkeit eingebracht und entnommen werden. Wenn die Datenträger auf Spulen bzw. Wickelkernen aufgewickelt sind, können insbesonders eine vorgebbare Mehrzahl derartiger Spulen vertikal oder horizontal, mit vorgebbaren Abstand zueinander, in die Rekonditionierungsflüssigkeit gehängt werden.

Bevorzugt kann weiter vorgesehen sein, dass die Rekonditionierungsflüssigkeit gegenüber dem Datenträger bewegt wird. Dadurch kann einer Ausdünnung der Konzentration des Weichmachers in der Rekonditionierungsflüssigkeit in unmittelbarer Umgebung des eingelegten Datenträgers verhindert werden. Weiters werden dadurch Schwebstoffe und/oder aus dem Datenträger ausgetretene Substanzen, wie beispielsweise Essigsäure und/oder alter Weichmacher, von der unmittelbaren Umgebung des Datenträgers wegtransportiert.

Die relative Bewegung der Rekonditionierungsflüssigkeit gegenüber dem Datenträger kann beispielsweise dadurch erfolgen, dass ein Behälter, in welchem sich die Rekonditionierungsflüssigkeit und der Datenträger befindet, bewegt wird, worauf die Rekonditionierungsflüssigkeit aufgrund Ihrer Trägheit in Bewegung versetzt wird.

Weiters kann vorgesehen sein, dass beispielsweise eine Vorrichtung, an welcher der Datenträger angeordnet ist, in der Rekonditionierungsflüssigkeit bewegt wird.

Die Rekonditionierungsflüssigkeit kann weiters durch eine Rührvorrichtung im Behälter bewegt werden.

Weiters kann die Rekonditionierungsflüssigkeit durch eine Umwälzpumpe bewegt werden. Bei der Verwendung der Umwälzpumpe kann weiters die Konzentration des Weichmachers in der Rekonditionierungsflüssigkeit überprüft und gegebenenfalls korrigiert werden. Weiters kann bei der Verwendung einer Umwälzpumpe ein Filter verwendet werden, welcher dazu geeignet ist, Schwebstoffe und/oder Chemikalien, wie beispielsweise Essigsäure, aus der Rekonditionierungsflüssigkeit zu filtern.

Weiters kann vorgesehen sein, dass die Rekonditionierungsflüssigkeit mittels Sprühen oder eines Aerosolnebels auf den Datenträger aufgebracht wird. Im Gegensatz zum Eintauchen des Datenträgers in die Rekonditionierungsflüssigkeit, wo die Konzentration des Weichmachers in der Rekonditionierungsflüssigkeit im Wesentlichen konstant bleibt, führt das Auftragen der Rekonditionierungsflüssigkeit auf den Datenträger mittels Sprühen oder eines Aerosolnebels dazu, dass sich kleine Tröpfen oder eine dünne Schicht der Rekonditionierungsflüssigkeit auf dem Datenträger bilden. Da das Lösungsmittel in der Rekonditionierungsflüssigkeit fortwährend verdampft, nimmt die Konzentration des Weichmachers im Tröpfchen und/oder der Schicht stetig zu, wodurch der ganze im Tröpfchen und/oder dünnen Schicht enthaltene Weichmacher vom Datenträger aufgenommen wird. Dadurch kann die Rekonditionierungsflüssigkeit sehr schonend auf den Datenträger aufgebracht werden, wobei der Weichmacher kontrollierbar vom Datenträger aufgenommen wird.

Bei Datenträgern, bei welchen die Informationsschicht und/oder Trägerschicht Sprünge und/oder Risse durch den Alterungsprozess aufweist, oder bei welchen eine zumindest bereichsweise Delamination von Informationsschicht und Trägerschicht stattgefunden hat, kann es aufgrund einer Kapillarwirkung zu einer Einlagerung der Rekonditionierungsflüssigkeit in den Hohlräumen kommen, wenn der Datenträger mit der Rekonditionierungsflüssigkeit besprüht, und/oder in die Rekonditionierungsflüssigkeit getaucht wird. Solche punktuellen Einlagerungen können nachteilhaft für so einen Datenträger, beispielsweise eine Lackplatte, sein. Es kann deshalb vorgesehen sein, dass die Rekonditionierungsflüssigkeit mittels eines Schwamms oder eines Tampons auf den Datenträger aufgebracht wird. Der Schwamm oder das Tampon wirken der Kapillarwirkung der Risse und/oder Hohlräumen des Datenträgers entgegen, wodurch es zu nur sehr geringer Einlagerung von Rekonditionierungsflüssigkeit in den Datenträger kommt.

In weiterer Ausbildung der Erfindung kann vorgesehen sein, dass die Rekonditionierungsflüssigkeit für eine vorgebbare Zeitdauer auf den Datenträger aufgebracht wird. Bevorzugt kann vorgesehen sein, dass der Datenträger, insbesondere nach Ablauf der vorgebbaren Zeitdauer, von der Rekonditionierungsflüssigkeit entfernt wird.

Insbesondere kann vorgesehen sein, dass die Rekonditionierungsflüssigkeit für eine vorgebbare Zeitdauer von wenigstens einer Stunde auf den Datenträger aufgebracht wird. Es hat sich gezeigt, dass diese Zeitdauer bereits ausreichend ist, damit es zu einer Verbesserung der mechanischen Eigenschaften und/oder Wiedergabequalität des Datenträgers kommt.

Vorzugsweise wird die Rekonditionierungsflüssigkeit für eine vorgebbare Zeitdauer von wenigstens drei Stunden auf den Datenträger aufgebracht, wobei hier die positiven Effekte, welche nach einer ersten Zeitdauer von einer Stunde beobachtet werden konnten, noch weiter verstärkt werden.

Besonders bevorzugt wird die Rekonditionierungsflüssigkeit für eine vorgebbare Zeitdauer von wenigstens fünf Stunden auf den Datenträger aufgebracht. Es hat sich im Verlauf von Untersuchungen herausgestellt, dass, wenn die Rekonditionierungsflüssigkeit auf einen losen Abschnitt eines Datenträgers für sechs Stunden aufgebracht wurde, der Datenträger eine höhere Konzentration des Weichmachers aufweist. Weiters haben Versuche gezeigt, dass ein längeres Aufbringen der Rekonditionierungsflüssigkeit diese Konzentration des Weichmachers im Datenträger nur unwesentlich erhöht und keine negativen Effekte mit sich gebracht hat. Dadurch kann das Verfahren auch von unerfahrenen und/oder unzuverlässigen Personen ausgeführt werden, da eine zu hohe vorgebbare Zeitdauer, insbesonders ein unbeabsichtigtes Vergessen des Datenträgers in der Rekonditionierungsflüssigkeit, keine negativen Folgen für den Datenträger mit sich bringt.

Es hat sich ebenfalls im Rahmen von Untersuchungen gezeigt, dass es vorteilhaft ist, die Rekonditionierungsflüssigkeit länger auf den Datenträger aufzubringen, beispielsweise, wenn der Datenträger auf einer Spule aufgewickelt ist.

Bei einem konkreten Test wurden zwei idente, auf einer Spule aufgewickelte Datenträger für sechs Stunden bzw. achtzehn Stunden in die Rekonditionierungsflüssigkeit getaucht. Während für die Teile der jeweiligen Datenträger, welche am äußeren Ende der Spule angeordnet, und damit der Rekonditionierungsflüssigkeit stärker ausgesetzt, waren und für sechs Stunden bzw. achtzehn Stunden in die Rekonditionierungsflüssigkeit getaucht wurden, nur ein geringer Unterschied in der Konzentration des Weichmachers auszumachen war, wiesen die Teile des Datenträgers, welche im Inneren der Spule angeordnet waren, einen deutlichen Unterschied, ca. eine Verdoppelung, in der Konzentration des Weichmachers auf. Dabei hatte der Teil des Datenträgers, welcher im Inneren der Spule angeordnet war und für achtzehn Stunden in der Rekonditionierungsflüssigkeit getaucht wurde, zwei Drittel der Konzentration des Weichmachers der beiden Teile, welche am äußeren Ende der Spule angeordnet waren.

Dadurch, dass bei einem Teilstück eines auf einer Spule aufgewickelten Datenträgers, unabhängig von der Anordnung dieses Teilstückes des Datenträgers in der Spule, eine äquivalente Wirkung erzielt wird, kann ein auf einer Spule aufgewickelter Datenträger ohne abgewickelt zu werden vollständig in die Rekonditionierungsflüssigkeit getaucht werden. Dadurch, dass ein auf einer Spule aufgewickelter Datenträger dem Verfahren unterzogen werden kann, kann auch ein auf einer Spule aufgewickelter Datenträger einerseits wieder elastisch gemacht werden, andererseits löst sich dadurch die mechanische Verzahnung des auf einer Spule aufgewickelten Lagen des Datenträgers, da der Kunststoffanteil wieder aufquillt, was ein Abspielen oder Kopieren der auf dem Datenträger gespeicherten Informationen wieder ermöglicht, da der behandelte Datenträger zerstörungsfrei von der Spule abgewickelt werden kann.

In weiterer Ausgestaltung der Erfindung kann vorgesehen sein, dass der Datenträger, bevor die Rekonditionierungsflüssigkeit aufgebracht wird, einer Voruntersuchung 1 unterzogen wird. Dadurch können die Prozessparameter dem Zustand des Datenträgers angepasst werden, was in vorteilhafter Weise ein schonendes erfindungsgemäßes Verfahren für den Datenträger ermöglicht. Weiters kann der Zustand des Datenträgers vor und nach der Behandlung durch das erfindungsgemäße Verfahren verglichen werden, wodurch Schlüsse über die Wirksamkeit der Behandlung bzw. über ein mögliches weiteres Vorgehen gemacht werden können.

In Weiterführung der Erfindung kann vorgesehen sein, dass vor der Aufbringung der Rekonditionierungsflüssigkeit ein Schädigungsgrad des Datenträgers ermittelt wird. Dadurch kann der weitere Verfahrensablauf dem Schädigungsgrad des Datenträgers angepasst werden, wodurch eine schonende aber effektive Behandlung des Datenträgers erzielt werden kann.

Gemäß einer weiteren Ausbildung der Erfindung kann vorgesehen sein, dass zur Ermittlung des Schädigungsgrades wenigstens ein Test einer mechanischen Eigenschaft an wenigstens einer Probe des zu behandelnden Datenträgers durchgeführt wird. Dadurch kann beispielsweise die Elastizität und/oder die Dehnbarkeit bestimmt und dadurch auf die Konzentration des Weichmachers im Datenträger geschlossen werden.

In einer bevorzugten Ausführungsform der Erfindung wird der Schädigungsgrad des Datenträgers mittels wenigstens eines Zugversuches ermittelt, da der Zugversuch ein anerkanntes, standardisiertes und kostengünstiges Prüfverfahren ist. Weiters lässt sich aus dem Zugversuch gut auf den Schädigungsgrad des Datenträgers schließen.

Gemäß einer weiteren bevorzugten Ausführungsform der Erfindung kann vorgesehen sein, dass die mechanischen Eigenschaften mittels einer Dynamisch Mechanischen Analyse, bzw. einer Dynamisch Mechanisch-Thermischen Analyse, welche auch als DMA bzw. DMTA bezeichnet wird, ermittelt werden. Dadurch kann die Elastizität des Datenträgers und damit der Schädigungsgrad bestimmt werden. Gemäß einer anderen Ausführung der Erfindung kann vorgesehen sein, dass ein Teil des zu behandelnden Datenträgers im Rahmen der Voruntersuchung 1 mittels Gaschromatografie, insbesondere mittels einer Thermodesorptionsuntersuchung, untersucht wird, wobei die verschiedenen Weichmacher im Datenträger und deren Konzentration bestimmt werden können. Dadurch kann die Zusammensetzung der Rekonditionierungsflüssigkeit, welche auf den untersuchten Datenträger aufgebracht wird, besser auf diesen Datenträger abgestimmt werden.

In Weiterführung der Erfindung kann vorgesehen, dass zur Ermittlung des Schädigungsgrades eine optische Zustandsbewertung des Datenträgers durchgeführt wird. Dabei kann eine fachkundige Person, beispielsweise auch unter Zuhilfenahme eines optischen Gerätes, insbesondere Mikroskop und/oder Lupe, den Schädigungsgrad des Datenträgers erkennen, beispielsweise wie gut die Informationsschicht noch an der Trägerschicht haftet. Weiters kann bevorzugt der Zustand des Datenträgers optisch, vorzugsweise mittels Kamera und/oder Scanner, erfasst und digitalisiert werden und die weitere Bewertung mittels einer Bildbearbeitungssoftware erfolgen, welche Anzeichen, wie an die Oberfläche des Datenträgers gesickerter Weichmacher und/oder Wölbung des Datenträgers, quantitativ auswerten kann. Eine optische Zustandsbewertung kann weiters auch mittels Infrarotspektroskopie erfolgen. Dadurch können die weiteren Verfahrensschritte an den Schädigungsgrad des Datenträgers angepasst werden, wodurch das erfindungsgemäße Verfahren noch besser an den tatsächlichen Zustand des Datenträgers angepasst werden kann. Weiters kann dieses Prüfverfahren berührungs- und zerstörungsfrei durchgeführt werden.

In weiterer Ausgestaltung der Erfindung kann vorgesehen sein, dass zur Ermittlung des Schädigungsgrades wenigstens an einer Probe des Datenträgers eine Qualität der Informationswiedergabe ermittelt wird. Die Qualität der Informationswiedergabe kann dabei bevorzugt durch die Wiedergabequalität hochfrequenter Inhalte, wie etwa von Obertönen bei Tonaufnahmen und/oder feinen Bilddetails bei fotografischen Inhalten, bestimmt werden. Dadurch kann der Zustand der auf dem Datenträger gespeicherten Informationen, deren Wiedergabe durch das erfindungsgemäße Verfahren verbessert wird, vor der Durchführung des Verfahrens bestimmt werden, womit die Prozessparameter für die letztendlich interessante Größe optimiert werden können.

In weiterer Ausgestaltung der Erfindung kann vorgesehen sein, dass die vorgebbare Zeitdauer anhand des Schädigungsgrades des Datenträgers bestimmt wird. Dadurch kann eine kurze Zeitdauer gewählt werden. Dadurch können auch größere Archive von Datenträger in der kürzest möglichen Zeit, bei welcher noch die gewünschte Wirkung des erfindungsgemäßen Verfahrens auftritt, behandelt werden. Dieses ist vorteilhaft, da größere Archive von Datenträgern eine dementsprechend längere Gesamtdauer der Durchführung des erfindungsgemäßen Verfahrens verursachen. Bei einem großen Archiv an Datenträgern kann die vorgebbare Zeitdauer des erfindungsgemäßen Verfahrens empirisch anhand einer Testserie optimiert werden, sofern die Datenträger des Archivs den gleichen Schädigungsgrad aufweisen.

In Weiterführung der Erfindung kann vorgesehen sein, dass bei der Bestimmung der vorgebbaren Zeitdauer die Temperatur der Rekonditionierungsflüssigkeit berücksichtigt wird. Dadurch kann durch Regelung der Temperatur der Rekonditionierungsflüssigkeit die vorgebbare Zeitdauer weiter verkürzt werden. Falls der Prozessaufbau eine Regelung der Temperatur nicht ermöglicht, kann dadurch weiters durch eine Bestimmung der Umgebungstemperatur, welche sich nach einem Einschwingvorgang im thermodynamischen Gleichgewicht mit der Temperatur der Rekonditionierungsflüssigkeit befindet, die vorgebbare Zeitdauer der Umgebungstemperatur angepasst werden.

In weiterer Ausgestaltung der Erfindung kann vorgesehen sein, dass nach dem Aufbringen der Rekonditionierungsflüssigkeit überzähliger Weichmacher von dem Datenträger entfernt wird, insbesondere durch im Wesentlichen reines Lösungsmittel. Das kann erfolgen, indem der Datenträger nach der Behandlung mit der Rekonditionierungsflüssigkeit über ein mit einer Waschsubstanz getränktes Gewebe gezogen wird. Weiters kann der Datenträger auch für eine zweite vorgebbare Zeit in der Waschsubstanz geschwenkt werden. Als Waschsubstanz können bevorzugt Flüssigkeiten verwendet werden, welche auch als Lösungsmittel geeignet sind. Dadurch wird überflüssiger Weichmacher von der Oberfläche des Datenträgers entfernt, und damit eine ungewollte weitere Reaktion vermieden. Dieser Waschvorgang 3 kann auch eine Kombination der vorstehenden Handlungen sein.

In Weiterführung der Erfindung kann vorgesehen sein, dass der Datenträger nach dem Aufbringen der Rekonditionierungsflüssigkeit von einer ersten Spule abgespult wird, und auf eine zweite Spule aufgespult wird. Dadurch wird die Biegsamkeit des Datenträgers und damit die Qualität der Wiedergabe der gespeicherten Information verbessert. Dieses Abspulen von der ersten Spule mit anschließendem Aufspulen auf die zweite Spule wird im weiteren Verlauf auch als Umspulungsvorgang 4 bezeichnet und kann auch mehrmals erfolgen. Dabei kann auch eine vorgebbare mechanische Umlenkung des Datenträgers vorgesehen sein.

Weiters kann der Datenträger in der Waschsubstanz umgespult werden, wodurch beide Prozesse gleichzeitig erfolgen können.

In Weiterbildung der Erfindung kann vorgesehen sein, dass der Datenträger nach dem Aufbringen der Rekonditionierungsflüssigkeit getrocknet wird. Dieser Vorgang, in Folge Trocknungsvorgang 5 genannt, kann mittels eines Gebläses bzw. einer Trocknungsvorrichtung erfolgen, oder durch Auflegen des Datenträgers in einer gut gelüfteten Umgebung. Dadurch wird dem Befall des Datenträgers durch Pilze, Bakterien oder anderen Mikroorganismen vorgebeugt, wodurch der Datenträger und die darauf enthaltenen wertvollen und unersetzlichen Kulturgüter nach der Behandlung wieder für eine längere Zeit gelagert werden können.

In weiterer Ausgestaltung des Verfahrens kann vorgesehen sein, dass der Rekonditionierungsflüssigkeit weitere Zusatzstoffe, vorzugsweise Biozide, beigegeben werden. Dadurch kann weiter dem Befall des Datenträgers durch Pilze, Bakterien oder anderen Mikroorganismen vorgebeugt werden. Weitere Zusatzstoffe können Substanzen sein, welche den Datenträger imprägnieren und/oder versiegeln, um diesen nachhaltig zu schützen.

Die einzige Figur zeigt eine besonders bevorzugte Ausführungsform des Verfahrens, welches nachfolgend anhand der konkreten Anwendung auf ein gealtertes Tonband des Typs AGFA WOLFEN TYP 100 im Detail beschrieben wird.

Bei dieser besonders bevorzugten Ausführungsform des Verfahrens wird der Datenträger in einem ersten Verfahrensschritt einer Voruntersuchung 1 unterzogen. Diese Voruntersuchung 1 umfasst eine optische Begutachtung, zwecks Einschätzung des Schädigungsgrades, und eine Prüfung der Qualität der Wiedergabe der Information mittels Sonagramm. Weiters kann auch ein Zugversuch zur Bestimmung der Dehnbarkeit und der Elastizität des Datenträgers oder eine gaschromatografischen Untersuchung zur Feststellung der im Datenträger enthaltenen Weichmacher durchgeführt werden.

Bei dieser bevorzugte Ausführungsform wird ein Tauchbad mit einer Rekonditionierungsflüssigkeit, bestehend aus 2 Vol.-% Di-2-ethylhexylphtalat als Weichmacher und 98 Vol.-% Shellsol D40 als Lösungsmittel, befüllt. Das Tauchbad befindet sich auf Raumtemperatur, vorzugsweise ca. 20°C.

Die vorgebbare Zeitdauer beträgt sechs Stunden, wenn der Datenträger nicht auf einer Spule aufgewickelt ist, und achtzehn Stunden wenn der Datenträger auf einer Spule aufgewickelt ist.

Danach wird der Datenträger bei einem Tauchvorgang 2 in das bereitete Tauchbad für die vorgebbare Zeitdauer eingelegt.

Das Tauchbad enthält einen Gitterrost am Boden, auf welchen der Datenträger aufgelegt wird, so, dass er vollständig von der Rekonditionierungsflüssigkeit umgeben ist.

Bei dieser besonders bevorzugten Ausführungsform des Verfahrens wird der Datenträger nach der Entnahme aus dem Tauchbad einem Waschvorgang 3 unterzogen, wobei der Datenträger in Shellsol D40 geschwenkt wird.

In Folge wird bei dieser besonders bevorzugten Ausführungsform des Verfahrens der auf einer Spule aufgewickelte Datenträger einem Umspulungsvorgang 4 unterzogen. Dieser Umspulvorgang 4 kann mit dem Waschvorgang 3 auch kombiniert werden. Als letzter Verfahrenschritt bei dieser besonders bevorzugten Ausführungsform des Verfahrens wird der Datenträger von einem Gebläse getrocknet.

Bei dem genannten konkreten Beispiel kann durch die erste bevorzugte Ausführungsform des Verfahrens der Di-2-ethylhexylphtalat Gehalt in dem Datenträger um das zweihundertfache vergrößert, und die Dehnbarkeit von ca 10 % auf ca. 17 % vergrößert werden. Weiters wird die Klangqualität des Tonbandes erheblich verbessert, wobei insbesonders die Obertöne deutlicher hervortreten bzw. auch das Hintergrundrauschen gleichmäßiger, und damit weniger irritierend, wird.

Weitere erfindungsgemäße Ausführungsformen weisen lediglich einen Teil der beschriebenen Merkmale auf, wobei jede Merkmalskombination, insbesondere auch von verschiedenen beschriebenen Ausführungsformen, vorgesehen sein kann.

## Patentansprüche

1. Verfahren zur Rekonditionierung von Datenträgern mit einem Kunststoffanteil, wobei eine Rekonditionierungsflüssigkeit für eine vorgebbare Zeitdauer von wenigstens einer Stunde in flüssiger Phase auf den Datenträger aufgebracht wird, wobei die Rekonditionierungsflüssigkeit ein Lösungsmittel und zumindest einen Weichmacher umfasst, dass das Lösungsmittel derart ausgewählt wird, dass es gegenüber dem Datenträger im Wesentlichen inert ist, in einer Weise dass das Lösungsmittel keine chemische Verbindung mit dem Datenträger eingeht, und nicht in den Datenträger eindiffundiert und den Datenträger nicht quillt, wobei ein nicht flüchtiger Weichmacher ausgewählt wird, und die Konzentration des Weichmachers in der Rekonditionierungsflüssigkeit derart gewählt wird, dass der Volumenänderungsgradient des Datenträgers aufgrund des Austausches von Weichmacher mit der Rekonditionierungsflüssigkeit positiv ist.

2. Verfahren nach Anspruch 1, **dadurch gekennzeichnet, dass** der Weichmacher derart ausgewählt wird, dass er mit dem Lösungsmittel homogen mischbar ist.

3. Verfahren nach Anspruch 1 oder 2, **dadurch gekennzeichnet, dass** der Datenträger in die Rekonditionierungsflüssigkeit getaucht wird.

4. Verfahren nach einem der Ansprüche 1 bis 3, **dadurch gekennzeichnet, dass** die Rekonditionierungsflüssigkeit gegenüber dem Datenträger bewegt wird.

5. Verfahren nach einem der Ansprüche 1 bis 4, **dadurch gekennzeichnet, dass** die Rekonditionierungsflüssigkeit mittels Sprühen oder eines Aerosolnebels auf den Datenträger aufgebracht wird.

6. Verfahren nach einem der Ansprüche 1 bis 5, **dadurch gekennzeichnet, dass** die Rekonditionierungsflüssigkeit mittels eines Schwamms oder eines Tampons auf den Datenträger aufgebracht wird.

7. Verfahren nach einem der Ansprüche 1 bis 6, **dadurch gekennzeichnet, dass** die Rekonditionierungsflüssigkeit für eine vorgebbare Zeitdauer von wenigstens drei Stunden, insbesondere wenigstens fünf Stunden, auf den Datenträger aufgebracht wird.

8. Verfahren nach Anspruch 7, **dadurch gekennzeichnet, dass** die vorgebbare Zeitdauer anhand des Schädigungsgrades des Datenträgers bestimmt wird.

9. Verfahren nach einem der Ansprüche 1 bis 8, **dadurch gekennzeichnet, dass** der Datenträger nach dem Aufbringen der Rekonditionierungsflüssigkeit getrocknet wird.

10. Verfahren nach einem der Ansprüche 1 bis 9, **dadurch gekennzeichnet, dass** nach dem Aufbringen der Rekonditionierungsflüssigkeit überzähliger Weichmacher von dem Datenträger entfernt wird, insbesondere durch im Wesentlichen reines Lösungsmittel.

11. Verfahren nach einem der Ansprüche 1 bis 10, **dadurch gekennzeichnet, dass** der Rekonditionierungsflüssigkeit weitere Zusatzstoffe, vorzugsweise Biozide, beigegeben werden.

12. Verfahren nach einem der Ansprüche 1 bis 11, **dadurch gekennzeichnet, dass** als Datenträger ein Bandmaterial, vorzugsweise mit einer magnetisierbare Partikel umfassenden Informationsschicht, verwendet wird.

13. Verfahren nach einem der Ansprüche 1 bis 12, **dadurch gekennzeichnet, dass** ein explosionsungefährliches Lögungsmittel verwendet wird.

14. Verfahren nach einem der Ansprüche 1 bis 13, **dadurch gekennzeichnet, dass** als Lösungsmittel entaromatisierte Kohlenwasserstoffe verwendet werden.

15. Verfahren nach einem der Ansprüche 1 bis 14, **dadurch gekennzeichnet, dass** ein uhtoxisches Lösungsmittel verwendet wird.

## Claims

1. A method for reconditioning data carriers having a plastic content, wherein a reconditioning liquid is applied in liquid phase to the data carrier for a predeterminable period of at least one hour, wherein the reconditioning liquid comprises a solvent and at least one plasticiser, the solvent is chosen in such a way that it is substantially inert in relation to the data carrier, in a manner that the solvent does not enter into any chemical compound with the data carrier, and does not diffuse into the data carrier and does not swell the data carrier, wherein a non-volatile plasticiser is chosen, and the concentration of the plasticiser in the reconditioning liquid is chosen in such a way that the gradient of the change in volume of the data carrier owing to the replacement of the plasticiser with the reconditioning liquid is positive.

2. A method according to claim 1, **characterized in that** the plasticiser is chosen such a way that it is miscible in a homogeneous manner with the solvent.

3. A method according to claim 1 or 2, **characterized in that** the data carrier is dipped into the reconditioning liquid.

4. A method according to one of the claims 1 to 3, **characterized in that** the reconditioning liquid is moved in relation to the data carrier.

5. A method according to one of the claims 1 to 4, **characterized in that** the reconditioning liquid is applied to the data carrier by means of spraying or an aerosol mist.

6. A method according to one of the claims 1 to 5, **characterized in that** the reconditioning liquid is applied by means of a sponge or a tampon to the data carrier.

7. A method according to one of the claims 1 to 6, **characterized in that** the reconditioning liquid is applied to the data carrier for a predeterminable period of at least three hours, especially for at least five hours.

8. A method according to claim 7, **characterized in that** the predeterminable period is determined on the basis of the degree of damage of the data carrier.

9. A method according to one of the claims 1 to 8, **characterized in that** the data media is dried after the application of the reconditioning liquid.

10. A method according to one of the claims 1 to 9, **characterized in that** excess plasticiser is removed from the data carrier that after the application of the reconditioning liquid, especially by substantially pure solvent.

11. A method according to one of the claims 1 to 10, **characterized in that** further additives, preferably biocides, are added to the reconditioning liquid.

12. A method according to one of the claims 1 to 11, **characterized in that** a tape material, preferably with an information layer comprising magnetisable particles, is used as the data carrier.

13. A method according to one of the claims 1 to 12, **characterized in that** a non-explosive solvent is used.

14. A method according to one of the claims 1 to 13, **characterized in that** dearomatised hydrocarbons are used as solvents.

15. A method according to one of the claims 1 to 14, **characterized in that** a nontoxic solvent is used.

## Revendications

1. Procédé pour le reconditionnement de supports de données comportant une part de matière plastique, dans lequel un liquide reconditionnant est appliqué sur le support de données en phase liquide pendant une durée prédéfinissable d'au moins une heure, le liquide reconditionnant contenant un solvant et au moins un plastifiant, dans lequel le solvant est choisi de telle manière qu'il est sensiblement inerte vis-à-vis du support de données, de telle sorte que le solvant ne se lie pas chimiquement au support de données et ne diffuse pas dans le support de données et ne fasse pas gonfler le support de données, dans lequel un plastifiant non volatil est choisi et la concentration du plastifiant dans le liquide reconditionnant est choisie de telle façon que le gradient de changement de volume du support de données suivant l'échange de plastifiant avec le liquide reconditionnant soit positif.

2. Procédé selon la revendication 1, **caractérisé en ce que** le plastifiant est choisi de façon à pouvoir être mélangé de façon homogène avec le solvant.

3. Procédé selon la revendication 1 ou 2, **caractérisé en ce que** le support de données est plongé dans le liquide reconditionnant.

4. Procédé selon l'une des revendications 1 à 3, **caractérisé en ce que** le liquide reconditionnant est déplacé par rapport au support de données.

5. Procédé selon l'une des revendications 1 à 4, **caractérisé en ce que** le liquide reconditionnant est appliqué sur le support de données par pulvérisation ou en aérosol.

6. Procédé selon l'une des revendications 1 à 5, **caractérisé en ce que** le liquide reconditionnant est appliqué sur le support de données au moyen d'une éponge ou d'un tampon.

7. Procédé selon l'une des revendications 1 à 6, **caractérisé en ce que** le liquide reconditionnant est appliqué sur le support de données pour une durée prédéfinissable d'au moins trois heures, en particulier d'au moins cinq heures.

8. Procédé selon la revendication 7, **caractérisé en ce que** la durée prédéfinissable est déterminée à partir du degré de détérioration du support de données.

9. Procédé selon l'une des revendications 1 à 8, **caractérisé en ce que** le support de données est séché après l'application du liquide reconditionnant.

10. Procédé selon l'une des revendications 1 à 9, **caractérisé en ce qu'**après l'application du liquide reconditionnant, le plastifiant en excès est enlevé du support de données, en particulier avec du solvant sensiblement pur.

11. Procédé selon l'une des revendications 1 à 10, **caractérisé en ce que** d'autres additifs, de préférence des biocides, sont ajoutés au liquide reconditionnant.

12. Procédé selon l'une des revendications 1 à 11, **caractérisé en ce que** le support de données utilisé est un matériau en bande, de préférence avec une couche d'informations contenant des particules magnétisables.

13. Procédé selon l'une des revendications 1 à 12, **caractérisé en ce que** le solvant utilisé ne crée aucun risque d'explosion.

14. Procédé selon l'une des revendications 1 à 13, **caractérisé en ce que** des hydrocarbures désaromatisés sont utilisés comme solvants.

15. Procédé selon l'une des revendications 1 à 14, **caractérisé en ce qu'**un solvant non toxique est utilisé.
